# EUROPEAN PATENT APPLICATION

(11) **EP 3 296 939 A1**
(43) Date of publication of application: **21.03.2018**
(21) Application number: 17191191.0
(22) Date of filing: 14.09.2017
(51) Int. Cl.: G06Q 20/20

(54) **INFORMATION PROCESSING DEVICE AND PROGRAM**

(30) Priority: 16.09.2016 JP 2016182340
(71) Applicant: Toshiba TEC Kabushiki Kaisha, Tokyo 141-8562 (JP)
(72) Inventor: MOTOKI, Fumiko, Shinagawa-ku,, Tokyo 141-8562 (JP)
(74) Representative: Takeuchi, Maya

(57) **Abstract**

An information processing device includes a storage unit that stores transaction journal data for transactions performed at a transaction settlement device in association with video data from a camera capturing images related to the transaction settlement device. A processor is configured to receive a retrieval condition input providing a retrieval condition for retrieving transaction journal data from the storage unit, retrieve the transaction journal data, corresponding to the retrieval condition, specify video data stored in the storage unit having the capture time and capture date corresponding to the transaction time and transaction date included the retrieved transaction journal data, and reproduce the specified video data, the specified video data being within a predetermined time period centered at the transaction date and transaction time of a transaction included in the retrieved journal data.

## Description

### FIELD

The present invention relates to technologies in the field of information processing in general, and embodiments described herein relate more particularly to an information processing device and a program.

### BACKGROUND

At a store such as a convenience store or a supermarket, series of images or video of a location near a Point-of-Sales (POS) terminal are taken by a camera for transaction recording, fraud monitoring, or the like. A known technique for processing such image data or video data includes acquiring date/time information from the camera itself, date/time information for transactions from the POS terminal, and transaction information from the POS terminal, and then displaying the image/video data in correspondence with the acquired transaction information.

However, in the related art described above, since image data or video data is not specifically correlated with a particular transaction processing at the POS terminal, there is a possibility that reproduced may not include images of the particular transaction, or might not include images at relevant points just before or after the particular transaction.

To solve such problems, there is provided an information processing device, comprising:
a storage unit that stores transaction journal data for transactions performed at a transaction settlement device in association with video data from a camera capturing images related to the transaction settlement device, the transaction journal data including transaction time and transaction date, the video data including capture time and capture date;
a processor configured to:
   receive a retrieval condition input providing a retrieval condition for retrieving transaction journal data from the storage unit;
   retrieve the transaction journal data, corresponding to the retrieval condition, from the storage unit;
   specify video data stored in the storage unit having the capture time and capture date corresponding to the transaction time and transaction date included the retrieved transaction journal data; and
   reproduce the specified video data, the specified video data being within a predetermined time period centered at the transaction date and transaction time of a transaction included in the retrieved journal data.

Preferably, the processor is further configured to start reproduction of the video data from the transaction date and transaction time included in the retrieved journal data.

Preferably still, the processor is further configured to:
receive a user instruction to change a reproduction position of the video data in a scale unit having a predetermined time interval, and
reproduce the video data from the changed reproduction position.

Preferably yet, the processor is further configured to receive a user instruction to change the scale unit.

Suitably, the processor changes the predetermined time period according to the changed scale unit.

Suitably still, a time server provides a time and a date to the transaction settlement device and the camera.

Suitably yet, the transaction journal data comprises a plurality of files stored in the storing unit, the files having file names indicating the transaction data and transaction time, and the video data is stored in image files having file names indicating capture time and capture date.

The invention also relates to a store checkout surveillance system, comprising:
a settlement device that performs registration and settlement of a transaction, and generates transaction journal data including information concerning the transaction and transaction date and transaction time;
a camera that records images of the transaction at the settlement devices and provides video data including capture time and capture date for recorded images in the video data;
the information processing device as defined above; and
a store server including the processor and configured to provide time and date information to the settlement device and the camera.

The invention further relates to a method for processing information comprising the steps to:
store transaction journal data for transactions performed at a transaction settlement device in association with video data from a camera capturing images related to the transaction settlement device in a storage device, the transaction journal data including transaction time and transaction date, the video data including capture time and capture date;
receive a retrieval condition input providing a retrieval condition for retrieving transaction journal data from the storage device;
retrieve the transaction journal data, corresponding to the retrieval condition, from the storage device;
specify video data stored in the storage device having the capture time and capture date corresponding to the transaction time and transaction date included the retrieved transaction journal data; and
reproduce the specified video data, the specified video data being within a predetermined time period centered at the transaction date and transaction time of a transaction included in the retrieved journal data.

Preferably, the method further comprises the step to:
start reproduction of the video data from the transaction date and transaction time included in the retrieved journal data.

Preferably still, the method further comprises the step to:
receive a user instruction to change a reproduction position of the video data in a scale unit having a predetermined time interval; and
reproduce the video data from the changed reproduction position.

Preferably yet, the method further comprises the step to:
receive a user instruction to change the scale unit.

In the above method, it preferably further comprises the step to:
change the predetermined time period according to the changed scale unit.

Suitably, the method further comprises the step to: provide, by a time server, a time and a date to the transaction settlement device and the camera.

Suitably yet, the transaction journal data comprises a plurality of files stored in the storage device, the files having file names indicating the transaction data and transaction time, and the video data is stored in image files having file names indicating capture time and capture date.

The invention further concerns a non-transitory computer readable medium storing a control program that, when implemented by a processor causes an information processing device to perform the method as defined above.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram of a checkout system according to an embodiment.
FIG. 2 is a diagram of a settlement terminal.
FIG. 3 is a diagram of a server apparatus.
FIG. 4 is a diagram of a retrieval terminal.
FIG. 5 is a diagram of a settlement terminal, a server apparatus, and a retrieval terminal.
FIG. 6 is a schematic diagram of a receipt.
FIG. 7 is a diagram of a folder structure of a data management area.
FIG. 8 is a flowchart of a process executed by a server apparatus.
FIG. 9 is a diagram of an operation screen.
FIG. 10 is an enlarged view near a retrieval date field of an operation screen illustrated in FIG. 9.
FIG. 11 is a diagram of an operation screen.
FIG. 12 is a diagram of an operation screen.
FIG. 13 is a diagram of an operation screen.
FIG. 14 is a flowchart of video data reproduction processing illustrated in FIG. 8.
FIG. 15 is a diagram of an operation screen.
FIG. 16 is a diagram of an operation screen.

### DETAILED DESCRIPTION

In general, according to one embodiment, an information processing device includes a storage unit that stores transaction journal data for transactions performed at a transaction settlement device in association with video data from a camera capturing images related to the transaction settlement device. A processor is configured to receive a retrieval condition input providing a retrieval condition for retrieving transaction journal data from the storage unit, retrieve the transaction journal data, corresponding to the retrieval condition, specify video data stored in the storage unit having the capture time and capture date corresponding to the transaction time and transaction date included the retrieved transaction journal data, and reproduce the specified video data, the specified video data being within a predetermined time period centered at the transaction date and transaction time of a transaction included in the retrieved journal data.

In the following, an information processing device and a program according to an embodiment will be described with reference to the drawings. In the present example embodiment, an information processing device and a program is applied to a checkout system, having a settlement terminal for performing registration and settlement of merchandise, at a store such as a convenience store or a supermarket. However, the disclosure is not limited to the example embodiment.

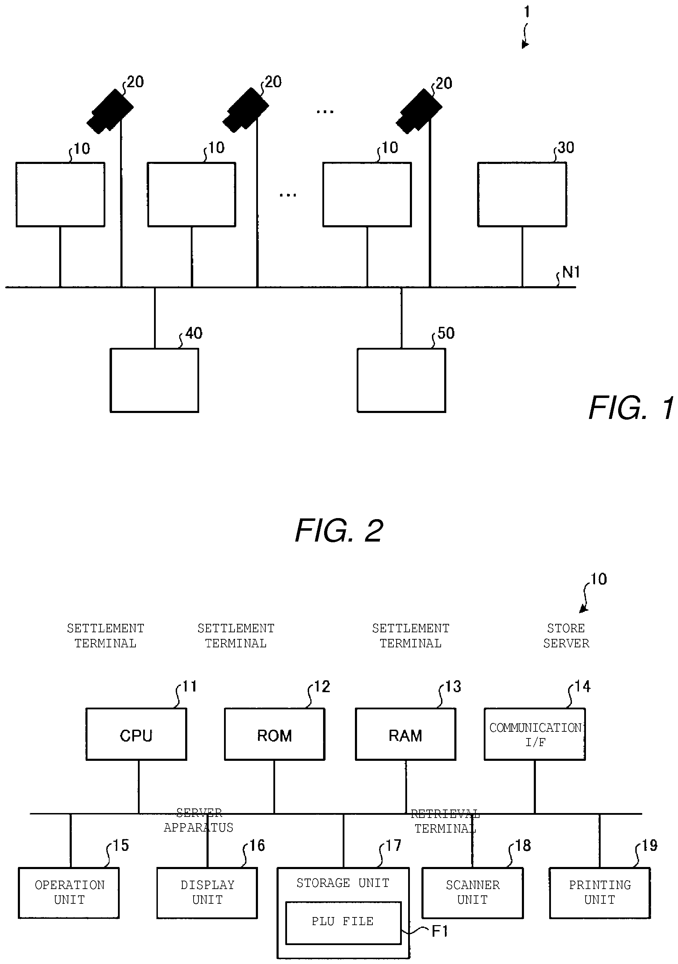

FIG. 1 is a diagram of a checkout system 1 according to an embodiment. As illustrated in FIG. 1, the checkout system 1 includes a plurality of settlement terminals 10, a plurality of cameras 20, a store computer 30, a server apparatus 40, and a retrieval terminal 50. Respective devices constituting the checkout system 1 are communicably connected to each other through a network N1 such as the LAN.

The settlement terminal 10 is used for registration of purchased commercial transaction by a customer and the settlement thereof. The settlement terminal 10 is, for example, a point-of-sale (POS) terminal or a semi self-service cash register installed at a checkout area or the like of the store, with which a customer performs settlement by himself/herself. The settlement terminals 10 generate receipt data indicating the content of commercial transaction and journal data each time when the commercial transaction is settled. The settlement terminals 10 causes a printing device (not illustrated) to print the generated receipt data so as to output a receipt. The settlement terminal 10 transmits the generated journal data to the server apparatus 40.

The receipt data and journal data include transaction detail data such as a merchandise code, a merchandise name, a unit price of merchandise, a number of merchandise, a sub-total price, a total price of merchandise sold and purchased through the commercial transaction, a tendered amount, a change due amount, and the like. The receipt data and journal data include additional information such as a terminal number for identifying each of the settlement terminals 10 by which commercial transaction is settled, a transaction number given to each commercial transaction, a code for identifying a user of each of the settlement terminals 10, date and time of a transaction at which settlement is completed, and the like. The store computer 30 provides a date and time at a time of a transaction to each of the settlement terminals 10.

The cameras 20, also referred to as image capturing devices, record images captured by an image capturing element such as a CCD as digital data. The cameras 20 are disposed such that each settlement terminals 10 is within an image capturing range of the respective camera 20. More specifically, the cameras 20 are respectively installed at positions where images of the respective settlement terminals 10 and a salesperson and a customer operating the settlement terminal 10 can be captured. Each camera 20 can be installed at an any location. For example, each camera 20 may be installed on the ceiling of the store, or in the vicinity of the settlement terminal 10.

Each camera 20 captures images at a constant rate, for example, 30 fps, and transmits a series of captured images, also referred to as frame images, which are sequential in time, to the server apparatus 40 as video data. The video data includes date and time information such as a time code indicating time and date of capturing the image for each frame. Each camera 20 performs clocking of the current date and time based on time data provided from store computer 30.

The store computer 30 is installed in, for example, a backyard of the store. The store computer 30 exchanges various data with the devices constituting the checkout system 1. For example, the store computer 30 distributes a PLU file Fl, which will be described later, to each settlement terminal 10 at predetermined timing.

The store computer 30 functions as a time server. Specifically, the store computer 30 provides time data representing the current time (e.g., the current date and time) to respective devices of the checkout system 1. The respective devices of the checkout system 1 add the time data provided by the store computer 30 to the video data. With this, synchronization of time clocking is performed in the checkout system 1 for each of the respective components. The time server is not limited to the store computer 30 and may be another device, for example, server apparatus 40.

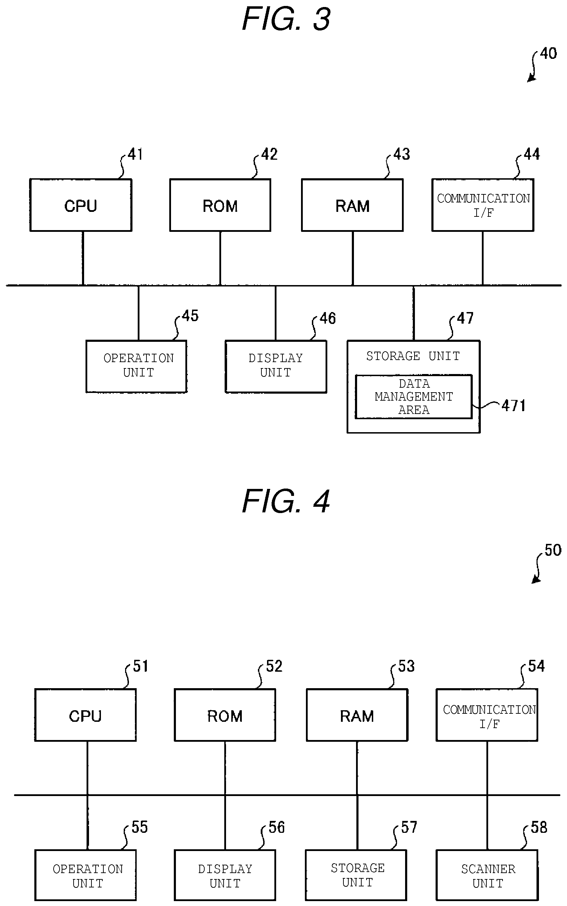

The server apparatus 40 is a server apparatus storing and managing journal data (e.g., a customer transaction log) and video data. More specifically, the server apparatus 40 receives journal data transmitted from each settlement terminal 10 and stores the journal data in the storage unit 47 (see FIG. 3) to be managed. The server apparatus 40 receives video data transmitted from each camera 20 and stores the video journal data in the storage unit 47 (see FIG. 3) to be managed.

The server apparatus 40 provides a retrieval service for journal data to an external device, for example, a retrieval terminal 50, which has accessed the server apparatus 40. Furthermore, the server apparatus 40 provides a reproduction or distribution service for video data to the external device (e.g., retrieval terminal 50) which accessed the server apparatus 40. In this example, the server apparatus 40 performs clocking of the current date and time based on time data provided from the store computer 30.

The retrieval terminal 50 is a device such as a personal computer (PC) or a tablet terminal and is operated by a user such as a salesperson. The retrieval terminal 50 can access the server apparatus 40 so as to receive service provided from the server apparatus 40. In this example, the retrieval terminal 50 performs clocking of the current date and time based on time data provided from the store computer 30.

FIG. 2 is a diagram of a settlement terminal 10. As illustrated in FIG. 2, the settlement terminal 10 includes a central processing unit (CPU) 11, a read only memory (ROM) 12, a random access memory (RAM) 13, a communication interface (I/F) 14, an operation unit 15, a display unit 16, a storage unit 17, a scanner unit 18, and a printing unit 19.

The CPU 11 is a processor and cooperates with a program stored in the ROM 12 and the storage unit 17 so as to control operations of the settlement terminal 10. The ROM 12 stores various programs to be executed by the CPU 11 and various data. The RAM 13 temporarily stores data and a program when the CPU 11 executes various programs.

The communication I/F 14 is a wired or wireless communication interface which is connectable to the network N1. The communication I/F 14 communicates with an external device, such as the store computer 30 or the server apparatus 40, through the network N1.

The operation unit 15 includes a user input device such as a keyboard or a pointing device. The operation unit 15 includes, for example, numeric keys, arithmetic keys, or a settlement key for instructing completion of transaction. When a user input is received, the operation unit 15 outputs a content of the operation to the CPU 11.

The display unit 16 includes a display device such as a liquid crystal display. The display unit 16 displays various information such as the transaction content, controlled by the CPU 11. The display unit 16 may include a touch panel. In this case, the touch panel functions as the operation unit 15.

The storage unit 17 is a storage device including a non-volatile storage medium such as a hard disk drive (HDD) or a solid state drive (SSD). The storage unit 17 stores various programs and various data relating to operations of the settlement terminal 10. For example, the storage unit 17 stores the PLU file F1 in which merchandise information is registered in correlation with a merchandise ID for identifying the merchandise. The merchandise information includes a merchandise name or a unit price of corresponding merchandise.

The scanner unit 18 is a reading device for reading a code symbol such as a bar code. The scanner unit 18 reads the code symbol attached to merchandise and outputs the merchandise ID included in the code symbol to the CPU 11. Here, the merchandise ID is a merchandise identifier for identifying respective merchandise, for example, a Japanese Article Number (JAN) code.

The printing unit 19 includes a printing device such as a thermal printer. The printing unit 19 prints receipt data on a predetermined paper medium, controlled by the CPU 11. The paper medium on which the receipt data is printed is handed to the customer as a receipt.

FIG. 3 is a diagram of a server apparatus 40. As illustrated in FIG. 3, the server apparatus 40 includes a CPU 41, a ROM 42, a RAM 43, a communication I/F 44, an operation unit 45, a display unit 46, and a storage unit 47.

The CPU 41 is a processor and cooperates with a program stored in the ROM 42 and the storage unit 47 so as to control operations of the server apparatus 40. The ROM 42 stores various programs executed by the CPU 41 and various data. The RAM 43 temporarily stores data and a program when the CPU 41 executes various programs.

The communication I/F 44 is a wired or wireless communication interface which is connectable to the network N1. The settlement terminal 10 communicates with an external device such as the store computer 30 or the retrieval terminal 50 through the network N1 via the communication I/F 44.

The operation unit 45 includes a user input device such as a keyboard or a pointing device. When a user input is received, the operation unit 45 outputs a content of the operation to the CPU 41. The display unit 46 includes a display device such as a liquid crystal display. The display unit 46 displays various information, controlled by the CPU 41. The display unit 46 may include a touch panel. In this case, the touch panel functions as the operation unit 45.

The storage unit 47 is a storage device including a non-volatile storage medium such as an HDD or an SSD. The storage unit 47 stores various programs and various data relating to operations of the server apparatus 40. The storage unit 47 holds a storage area for storing and managing journal data and video data as a data management area 471.

FIG. 4 is a diagram of a retrieval terminal 50. As illustrated in FIG. 4, the retrieval terminal 50 includes a CPU 51, a ROM 52, a RAM 53, a communication I/F 54, an operation unit 55, a display unit 56, a storage unit 57, and a scanner unit 58.

The CPU 51 is a processor and cooperates with a program stored in the ROM 52 and the storage unit 57 so as to control operations of the retrieval terminal 50. The ROM 52 stores various programs executed by the CPU 51 and various data. The RAM 53 temporarily stores data and a program when the CPU 51 executes various programs.

The communication I/F 54 is a wired or wireless communication interface which is connectable to the network N1. The communication I/F 54 communicates with an external device such as the store computer 30 or the server apparatus 40 through the network N1.

The operation unit 55 includes a user input device such as a keyboard or a pointing device. When a user input is received, the operation unit 55 outputs a content of the operation to the CPU 51. A display unit 56 includes a display device such as a liquid crystal display. The display unit 56 displays various information, controlled by the control of the CPU 51. The display unit 56 may include a touch panel. In this case, the touch panel functions as the operation unit 55.

The storage unit 57 is a storage device including a non-volatile storage medium such as an HDD or an SSD. The storage unit 57 stores various programs and various data relating to operations of the retrieval terminal 50. The storage unit 57 stores, for example, an application program, for example, a web browser, for receiving a service provided by the server apparatus 40.

The scanner unit 58 is a reading device for reading a code symbol such as a bar code. The scanner unit 58 reads the code symbol attached to the receipt and outputs transaction-specific information included in the code symbol to the CPU 11. Transaction-specific information will be described later.

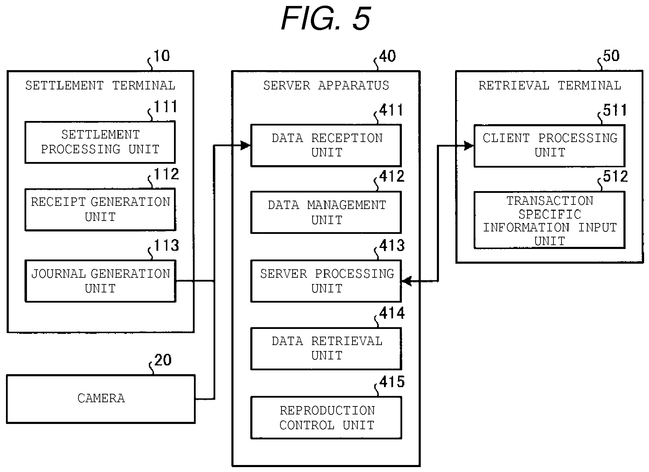

Next, description will be made on functional configurations of the settlement terminal 10, the server apparatus 40, and the retrieval terminal 50 described above. FIG. 5 is a diagram of the settlement terminal 10, the server apparatus 40, and the retrieval terminal 50.

The CPU 11 of the settlement terminal 10 cooperates with the program stored in the ROM 12 or the storage unit 17 so as to realize a settlement processing unit 111, a receipt generation unit 112, and a journal generation unit 113 as functional units.

The settlement processing unit 111 executes settlement processing relating to merchandise settlement. Specifically, when an input of a merchandise code is received from the scanner unit 18, the settlement processing unit 111 reads merchandise information corresponding to the merchandise code from the PLU file F1 and outputs the merchandise information to the display unit 16. The settlement processing unit 111 performs sales registration of merchandise based on the merchandise information. Here, sales registration refers to the merchandise information of merchandise read from the PLU file F1 is held in the RAM 13 in association with a number of the merchandise purchased, or the like.

The settlement processing unit 111 calculates a total price of the merchandise purchased based on the price and the sales number for which sales registration is performed by the settlement key of the operation unit 15. When payment of the total price is confirmed by a salesperson or the like, the settlement processing unit 111 notifies the receipt generation unit 112 and the journal generation unit 113 that settlement of a commercial transaction is completed.

When a notification of settlement completion is received from the settlement processing unit 111, the receipt generation unit 112 generates receipt data relating to commercial transaction. More specifically, the receipt generation unit 112 generates receipt data including transaction detail data of merchandise sold and purchased through the commercial transaction and additional information such as a transaction date and time, a terminal number, a transaction number, and an identification code of a person-in-charge. The receipt generation unit 112 encodes information capable of specifying the commercial transaction, referred to as transaction-specific information, into a code symbol such as a bar code so as to generate receipt data including the code symbol. Here, it is possible to include, for example, the terminal number, the transaction number, transaction date and time, and the like in the transaction-specific information. The receipt generation unit 112 cooperates with the printing unit 19 so as to output the generated receipt data as a receipt.

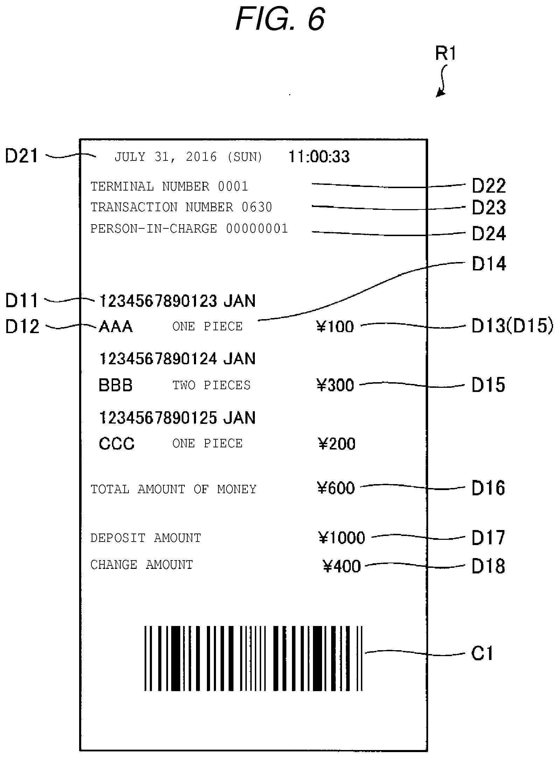

FIG. 6 is a diagram of a receipt. As illustrated in FIG. 6, a receipt R1 includes a transaction detail data, such as a merchandise code D11, a merchandise name D12, a unit price D13, a number of merchandise D14, a sub-total price D15, a total price D16, a tendered amount D17, a change due D18, for each commercial transaction. The receipt R1 includes additional information such as a transaction date and time D21, a terminal number D22, a transaction number D23, or a person-in-charge identification code D24. Furthermore, the receipt R1 includes a code symbol C1 holding information capable of specifying the commercial transaction. The code symbol is used for inputting a retrieval condition when journal data is retrieved.

The form of the receipt R1 is not limited to the example of FIG. 6. For example, a form in which any of additional information and the code symbol C1 is included in the receipt R1 may be adopted. A code in the code symbol C1 may be displayed on a lower part of the code symbol C1 so as to allow the code to be manually input.

Referring back to FIG. 5, when the notification of settlement completion is received from the settlement processing unit 111, the journal generation unit 113 generates journal data relating to the commercial transaction. More specifically, the journal generation unit 113 generates journal data including transaction detail data of merchandise sold and purchased through the commercial transaction and additional information such as the transaction date and time, the terminal number, the transaction number, the person-in-charge identification code. The journal generation unit 113 cooperates with the communication I/F 14 so as to transmit generated journal data to the server apparatus 40.

The journal data generated by the journal generation unit 113 may have any file name. For example, the journal generation unit 113 may generate journal data with a file name indicating a time at which journal data was generated, that is, the transaction date and time can be used as a file name. The journal generation unit 113 may generate journal data with a file name including a terminal number, transaction number, or other information.

The CPU 41 of the server apparatus 40 cooperates with the program stored in the ROM 42 or the storage unit 47 so as to realize a data reception unit 411, a data management unit 412, a server processing unit 413, a data retrieval unit 414, and a reproduction control unit 415 as the functional units.

The data reception unit 411 cooperates with the communication I/F 44 so as to receive journal data transmitted from each settlement terminal 10. The data reception unit 411 cooperates with the communication I/F 44 so as to receive video data transmitted from each camera 20.

If video data is transmitted in a streaming format, that is, the video data is continuous data without a gap, then the data reception unit 411 generates a video data file of a predetermined time duration, for example, 1-hour or 24-hour. The data reception unit 411 may include a date and time of a beginning of the video data and a date and time of an end of the video data in a file name of the video data file, based on time information included in the video data.

The data management unit 412 stores journal data and video data received by the data reception unit 411 in the data management area 471 of the storage unit 47. More specifically, the data management unit 412 stores and manages journal data and video data relating to the settlement terminal 10 in association with the terminal number of each settlement terminal 10.

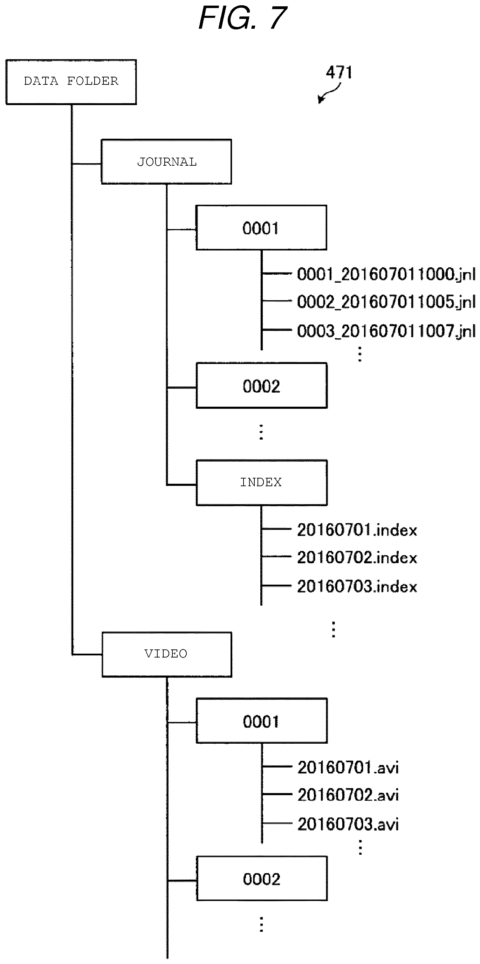

Here, a folder or director) structure of the data management area 471 will be described with reference to FIG. 7. FIG. 7 is a diagram of a folder structure of the data management area 471.

As illustrated in FIG. 7, the data management area 471 includes a root folder "data folder" with two subfolders: a "journal" subfolder and a "video" subfolder. The journal subfolder is an area in which journal data is stored and a video subfolder is an area in which video data is stored.

A "terminal number folder" and an "index folder" to which terminal numbers of the settlement terminals 10 are respectively assigned are provided within the journal folder. When the data reception unit 411 receives journal data, the data management unit 412 references the terminal number included in the journal data. The data management unit 412 stores journal data in a terminal number folder corresponding to the terminal number.

The data management unit 412 includes a transaction number included in the journal data in a file name of journal data when storing journal data in the terminal number folder, or after storing journal data. The transaction number may be assigned such that the transaction number is added to an original file name of journal data or the original file name is replaced with the transaction number.

In FIG. 7, three pieces of journal data to which transaction numbers of "0001" to "0003" have been given are stored in a terminal number folder of "0001." A number string portion following the transaction number is an original file name that is a generation date and time of journal data given by the journal generation unit 113. As such, the transaction number is included in the file name of journal data so as to make it possible to confirm the transaction number of each piece of journal data without referencing the content of journal data. With this, it is possible to efficiently retrieve video data by a transaction number as a retrieval condition.

In the present example embodiment, the transaction number is included to the file name. However, a file name is not limited to this format, and any information in journal data may be included in the file name. For example, a file name may be the generation date and time of journal data (e.g., the transaction date and time) without including a transaction number.

Furthermore, when storing the journal data, or after storing journal data, in the terminal number folder, the data management unit 412 may generate an index file in which a transaction date is included in a file name, based on the transaction date and time included in journal data. The data management unit 412 stores the generated index file in the index folder.

In FIG. 7, three index files using 20160701 to 20160703 as the file names are stored in the index folder. The index file is used for determining the presence or absence of journal data on a specific date. The index file may have any content and may be empty. When the index file indicates a transaction on a specific date is already present within the index folder, the data management unit 412 does not perform generation of the index file for that specific date.

A "terminal number folder" to which a terminal number of the settlement terminals 10 is assigned is also provided within the video folder. When the data reception unit 411 receives video data, the data management unit 412 specifies the terminal number of the settlement terminal 10 disposed within in the image capturing range of the camera 20 which has transmitted the video data. The data management unit 412 stores video data in the terminal number folder corresponding to the terminal number of the specified settlement terminal 10.

Here, the terminal number may be specified by any method. For example, the terminal number of the settlement terminal 10 corresponding to video data may be specified based on setting information obtained by correlating an identifier of the camera 20 with the terminal number of the settlement terminal 10 disposed within in the image capturing range of the camera 20. The identifier of the camera 20 that has captured video data or the terminal number of the settlement terminal 10 may be included in the video data so as to specify the terminal number of the settlement terminal 10 from video data received by the data reception unit 411.

In FIG. 7, three pieces of video data using 20160701 to 20160703 as the file names are stored in the terminal number folder of "0001." Here, the file name represents a date at which capturing of video data is started and time duration for one video data file is 24-hour.

A folder structure of the storage unit 47 relating to storing and managing of journal data and video data is not limited to the example of FIG. 7. For example, the index folder, or an index file, may be provided also within the video folder, similarly to journal data. For example, a folder indicating a date may be provided within the terminal number folder and journal data and video data may be managed by a transaction date. Although journal data and video data are divided to be managed in FIG. 7, each terminal number may be managed by using a same folder.

Referring back to FIG. 5, the server processing unit 413, the data retrieval unit 414, and the reproduction control unit 415 are functional units relating to a retrieval service of journal data and a reproduction service of video data.

The server processing unit 413 is realized by an application program, for example, a web browser and receives access via the retrieval terminal 50 from an external device through the communication I/F 44. The server processing unit 413 performs password authentication, IP address filtering, or the like so as to limit an external device to which access is allowed.

When communication with the retrieval terminal 50 is established, the server processing unit 413 provides an operation screen, for example, a graphical user interface (GUI) used for performing journal data retrieval or video data reproduction to the retrieval terminal 50. More specifically, the server processing unit 413 cooperates with a client processing unit 511 provided in the retrieval terminal 50 so as to display various information of an operation screen or the like on the display unit 56 of the retrieval terminal 50. The server processing unit 413 receives operation information instructing an operation content for the operation screen from the client processing unit 511 of the retrieval terminal 50 and changes a display content of the operation screen according to the operation content.

The data retrieval unit 414 retrieves journal data corresponding to a retrieval condition from the storage unit 47 based on the retrieval condition input through the operation screen. The reproduction control unit 415 reproduces video data in which the transaction date and time is included in time information based on the terminal number and transaction date and time of journal data retrieved by the data retrieval unit 414.

The server processing unit 413 cooperates with the data retrieval unit 414 and the reproduction control unit 415 so as to display the retrieval result of journal data and the reproduction screen of video data on the display unit 56 of the retrieval terminal 50. The operation screen provided by the server processing unit 413 or operations of the server processing unit 413, the data retrieval unit 414, and the reproduction control unit 415 will be described later.

The CPU 51 of the retrieval terminal 50 cooperates with the program stored in the ROM 52 or the storage unit 57 so as to realize the client processing unit 511 and a transaction-specific information input unit 512 as functional units.

The client processing unit 511 is realized by an application program, for example, a web browser and accesses the server apparatus 40 through the communication I/F 44. When communication with the server apparatus 40 is established, the client processing unit 511 displays various information such as the operation screen provided from the server apparatus 40 on the display unit 56. More specifically, the client processing unit 511 cooperates with the server processing unit 413 provided in the server apparatus 40 so as to display various information of the operation screen or the like provided by the server processing unit 413 on the display unit 56.

The client processing unit 511 receives an operation for the operation screen displayed on the display unit 56 through the operation unit 55 or the like and transmits operation information instructing the operation content to the server processing unit 413 of the server apparatus 40.

The transaction-specific information input unit 512 cooperates with an input device such as the scanner unit 58 so as to receive input of transaction-specific information. For example, when a code is read from the code symbol C1 given to the receipt R1 by the scanner unit 58, the transaction-specific information input unit 512 decodes the code so as to receive input of transaction-specific information. When transaction-specific information is input through a keyboard of the operation unit 15, the transaction-specific information input unit 512 receives input transaction-specific information. The client processing unit 511 transmits transaction-specific information received by the transaction-specific information input unit 512 to the server apparatus 40 (in particular, the server processing unit 413) as the retrieval condition.

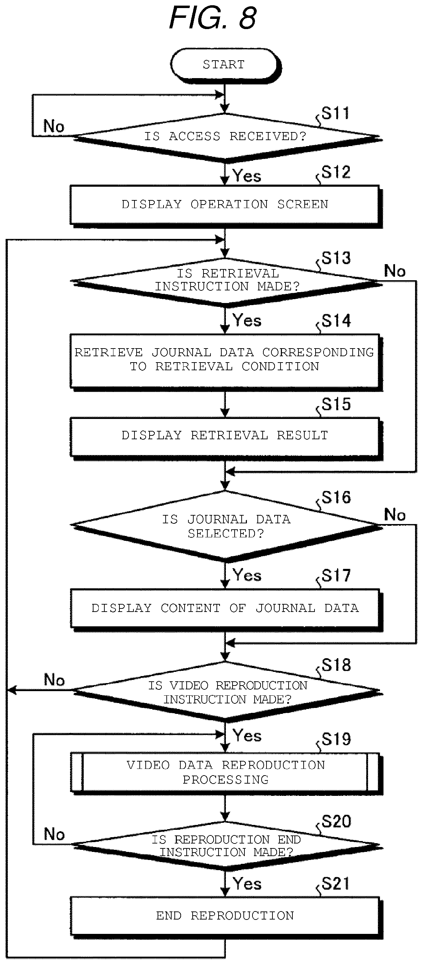

Next, operations of the checkout system 1 described above will be described. FIG. 8 is a flowchart of a process executed by the server apparatus 40. In the present process, journal data and video data are stored in the storage unit 47 (in particular, the data management area 471) of the server apparatus 40.

First, the server processing unit 413 waits until access is performed from the retrieval terminal 50 (No in Step S11). When access is received (Yes in Step S11), the server processing unit 413 provides the operation screen relating to retrieval of journal data to the retrieval terminal 50 so as to display the operation screen on the display unit 56 of the retrieval terminal 50 (Step S12).

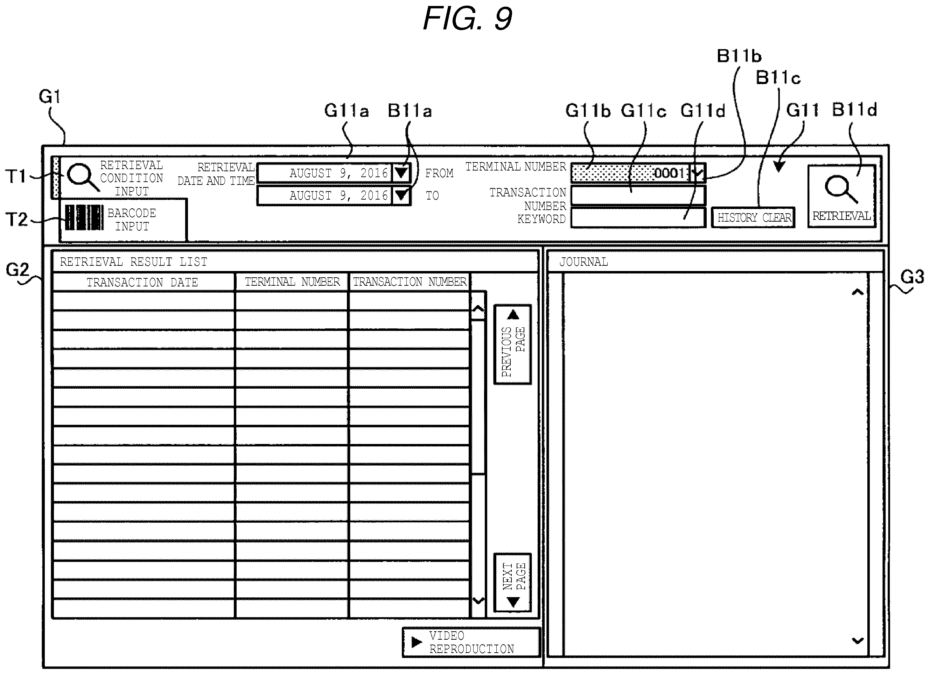

FIG. 9 is a diagram illustrating an example of an operation screen provided by the server apparatus 40. As illustrated in FIG. 9, the operation screen includes a retrieval condition input portion G1 for inputting the retrieval condition of journal data, a retrieval result display portion G2 for displaying a retrieval result of journal data, and a journal content display portion G3 for displaying a content of journal data.

The retrieval condition input portion G1 is adapted to enable replacement of an input method of the retrieval condition by operating a tab located in the left side of the screen. FIG. 9 illustrates a display form, referred to as a retrieval condition input screen G11 in the following, of the retrieval condition input portion G1 when a "retrieval condition input" tab is selected. The retrieval condition input screen G11 includes a retrieval date field G11a for inputting a retrieval date, a terminal number field G11b for inputting a terminal number, a transaction number field G11c for inputting a transaction number, and a keyword field G11d for inputting an arbitrary keyword.

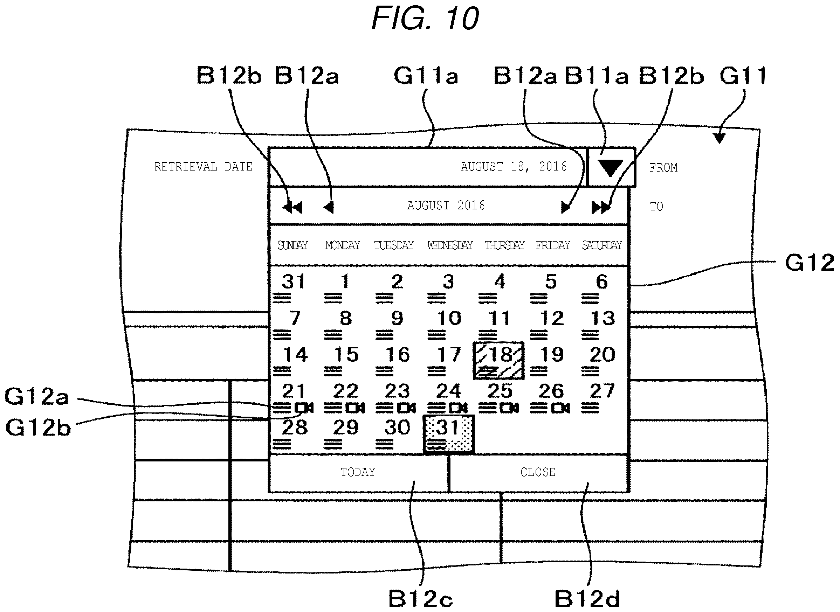

In the retrieval date field G11a a specific transaction date to be selected as a retrieval target or a period of time of the transaction date can be input (or designated) from a calendar. Specifically, when a calendar display button B11a disposed laterally with respect to the retrieval date field G11a is operated, the server processing unit 413, as illustrated in FIG. 10, a calendar image G12 representing a calendar is displayed. FIG. 10 is an enlarged view near the retrieval date field G11a of the operation screen illustrated in FIG. 9.

As illustrated in FIG. 10, a month movement button B12a for switching the calendar in a monthly basis and a year movement button B12b for switching the calendar in a yearly basis are provided in the calendar image G12. The server processing unit 413 switches display of the calendar image G12 according to the operation of the month movement button B12a or the year movement button B12b.

Regarding respective dates displayed on the calendar image G12, the server processing unit 413 respectively determines whether journal data and video data of the date are stored in the storage unit 47.

More specifically, the server processing unit 413 references the index folder within the journal folder and determines whether an index file, which has a date to be displayed on the calendar image G12 as a file name, is present or not. When it is determined that the index file is present, the server processing unit 413 determines that journal data of the date is stored in the storage unit 47. The server processing unit 413 references each piece of video data within the video folder and determines whether video data, which has a date to be displayed on the calendar image G12 in time information or the file name, is present or not. When it is determined that video data is present, the server processing unit 413 determines that video data of the date is stored in the storage unit 47. The server processing unit 413 displays an icon image representing a type of data in correlation with the date at which it is determined that data is stored.

In FIG. 10, an example in which an icon image G12a is displayed in correlation with the date at which journal data is present is illustrated. Also, an example in which an icon image G12b is displayed in correlation with the date at which video data is present is illustrated. With this, the user of the retrieval terminal 50 is able to easily confirm whether which date journal data or video data is present and thus, it is possible to improve convenience when retrieving journal data.

The date to be displayed on the calendar image G12 can be selected and the user is able to select (or designate) a desired date. When a specific date is designated, the server processing unit 413 displays the date to be highlighted so as to be clearly demonstrated and identified from another date (see August 18). As illustrated in FIG. 9, the calendar display button B11a is provided at each date between a start point and an end point and thus, a date different from the calendar image G12 displayed in each calendar display button B11a is designated so as to make it possible to designate a period of time of a retrieval target. When the same date is designated from the calendar image G12 displayed in each calendar display button B11a, the designated date is set as a retrieval date.

In the lower part of the calendar image G12, a today button B12c for designating a today's date and a close button B12d for instructing to erase the calendar image G12 are provided. When the pressing of the today button B12c is received, the server processing unit 413 displays the calendar image G12 of this month and displays the date of today to be highlighted so as to be clearly demonstrated and identified from another date (see August 31). When the operation of the close button B12d is received, the server processing unit 413 erases the calendar image G12 and displays the designated date or the period of time on the retrieval date field G11a of the retrieval condition input screen G11.

Referring back to FIG. 9, the terminal number field G11b of the retrieval condition input screen G11 can input (or designate) a terminal number to be selected as the retrieval target. Specifically, when a pull-down button B11b disposed laterally to the terminal number field G11b is operated, the server processing unit 413 allows a pull down list, in which respective terminal number of the settlement terminals 10 are indicated, to be displayed (not illustrated). When one terminal number is designated from the pull down list, the server processing unit 413 allows the designated terminal number on the terminal number field G11b to be displayed.

The transaction number field G11c of the retrieval condition input screen G1 1 is an area for inputting the transaction number to be selected as the retrieval target. The server processing unit 413 may control a character string or a number of digits that can be input so that a character string deviated from a number format of the transaction number is not input.

The keyword field G11d of the retrieval condition input screen G11 is an area for inputting a keyword which becomes the retrieval target. The keyword may be an arbitrary character string such as the merchandise code, the merchandise name, or the person-in-charge identification code.

The server processing unit 413 saves the keyword, which has been input into the keyword field G11d as the retrieval condition, as a retrieval history, and displays the retrieval history in a list (not illustrated) when the keyword field G11d is selected. When one keyword is selected from the retrieval history, the server processing unit 413 displays the selected keyword on the keyword field G11d.

Here, any number of keywords may be held as the retrieval history and the number of keywords to be held may be set as a fixed value, for example, 10 keywords. In this case, for example, when an eleventh keyword is added, one keyword which is the oldest keyword or having low frequency of use may be deleted so as to hold 10 keywords as a history.

The keywords may be displayed in a list in any display sequence. Although the display sequence can be arbitrarily set, it is preferable that the last input keyword or a keyword having high frequency of use is displayed at a higher order. When the keyword displayed at a lower order of a list is selected, it is preferable that a display order of the keyword is set as the highest order or a higher order than before when the retrieval history is displayed next time. When the same keyword as the keyword present in the retrieval history is input to the keyword field G11d, it is preferable that the display order of the same keyword present in the retrieval history is set as the highest order or a higher order than before when the retrieval history is displayed next time.

As such, a display sequence of the keywords to be displayed as the retrieval history is controlled so as to make it possible to improve convenience relating to inputting of the keyword. When a history clear button B11c disposed laterally to the keyword field G11d is pressed, the server processing unit 413 erases all held retrieval histories.

In the retrieval condition input screen G11 described above, the user, who performs journal data retrieval inputs some or all of the retrieval date, the terminal number, the transaction number, and the keyword, presses a retrieval button B11d. When the retrieval button B11d is pressed, the server processing unit 413 receives each piece of input information as the retrieval condition. In the present example embodiment, at least the retrieval date and the terminal number are input and the operation of the retrieval button B11d is invalidated until the two items are input.

When displaying the operation screen (e.g., retrieval condition input screen G11), the server processing unit 413 displays the operation screen when a predetermined initial value is input into the retrieval date field G11a and the terminal number field G11b. Here, the initial value can be any value. In the present example embodiment, the server processing unit 413 inputs the today's date into the retrieval date field G11a as the initial value and inputs a predetermined terminal number into the terminal number field G11b.

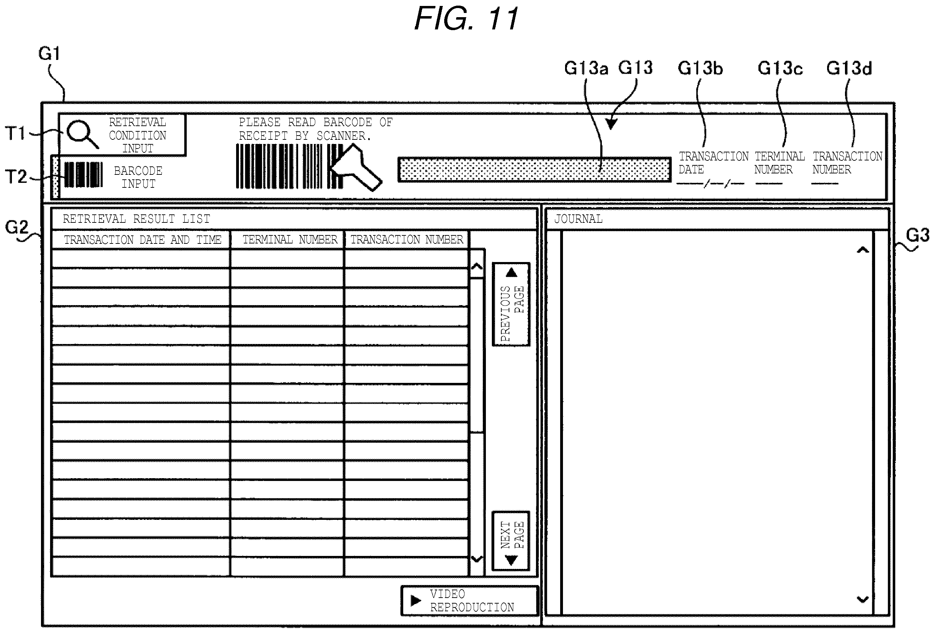

In the retrieval condition input portion G1, when the "bar code input" tab is selected, the server processing unit 413 switches the retrieval condition input portion G1 into a display form illustrated in FIG. 11. FIG. 11 is a diagram of the operation screen and illustrates a display form, , referred to as a bar code input screen G13 in the following, of the retrieval condition input portion G1 in which "bar code input" tab is selected. In the bar code input screen G13, transaction-specific information obtained by reading the code symbol C1 attached to the receipt R1 can be used as the retrieval condition.

When the bar code input screen G13 is displayed, when the code symbol C1 attached to the receipt R1 is read by the retrieval terminal 50, the server processing unit 413 cooperates with the client processing unit 511 of the retrieval terminal 50 so as to display the character string obtained by reading on a code display field G13a. The server processing unit 413 acquires transaction-specific information from a decoding result of a code and displays the transaction date and time, the terminal number, and the transaction number included in the transaction-specific information on the information display fields G13b to G13d. The server processing unit 413 receives respective pieces of information displayed on the information display fields G13b to G13d as the retrieval condition.

Inputting of transaction-specific information is not limited to a way of reading of the code symbol and transaction-specific information may be manually input. In this case, for example, the user of the retrieval terminal 50 inputs the character string of the code symbol into the code display field G13a. With this, the server processing unit 413 acquires transaction-specific information from the decoding result of the code input into the code display field G13a and displays the transaction date and time, the terminal number, and the transaction number included in the transaction-specific information on the information display fields G13b to G13d. The code decoding may be performed by the transaction-specific information input unit 512 of the retrieval terminal 50 or may be performed by the server processing unit 413.

Referring back to FIG. 8, the data retrieval unit 414 determines, by the pressing of the retrieval button B11d or inputting of transaction-specific information, whether journal data retrieval instruction is received or not (Step S13). When it is determined that the retrieval instruction is received, the data retrieval unit 414 proceeds to Step S16.

When it is determined that the retrieval instruction is received (Yes in Step S13), the data retrieval unit 414 retrieves journal data corresponding to the input retrieval condition among from journal data stored in the storage unit 47 (Step S14). For example, when the retrieval date and the terminal number are designated as the retrieval condition, the data retrieval unit 414 retrieves journal data corresponding to the retrieval date condition from among the terminal number folder corresponding to the designated terminal number.

Here, the data retrieval unit 414 starts retrieval processing from journal data generated at the newest (or the oldest) date and time among the retrieval date designated by the retrieval condition. When a predetermined number of pieces of journal data corresponding to the retrieval condition, referred to as maximum extraction number in the following, are extracted, the data retrieval unit 414 stops retrieval processing. The maximum extraction number can be any value. In the present example embodiment, the number of pieces of journal data that can be displayed at once on the retrieval result display portion G2 of the operation screen is set as the maximum extraction number.

When an instruction to continue retrieval processing is received, the data retrieval unit 414 restarts retrieval processing from the end position (corresponding to date and time) of previous retrieval processing, extracts pieces of journal data corresponding to the retrieval condition by the maximum extraction number of pieces, and then stops retrieval processing. Thereafter, each time when the instruction to continue retrieval processing is received, the data retrieval unit 414 restarts retrieval processing from the end position of previous retrieval processing and extracts pieces of journal data corresponding to the retrieval condition by the maximum extraction number of pieces. If the number of pieces of journal data corresponding to the retrieval condition does not satisfy the maximum extraction number of pieces, the data retrieval unit 414 stops retrieval processing at that point in time.

As such, the number of pieces of journal data to be extracted by one retrieval processing is limited and thus, it is possible to prevent retrieval processing from being inadvertently performed. A retrieval sequence (i.e., retrieval order) of the date and time when retrieving journal data can be selectively switched from a sequence starting from the newest one to a sequence starting from the oldest or vice versa.

Subsequently, the server processing unit 413 displays the retrieval result of Step S14 on the retrieval result display portion G2 of the operation screen (Step S15).

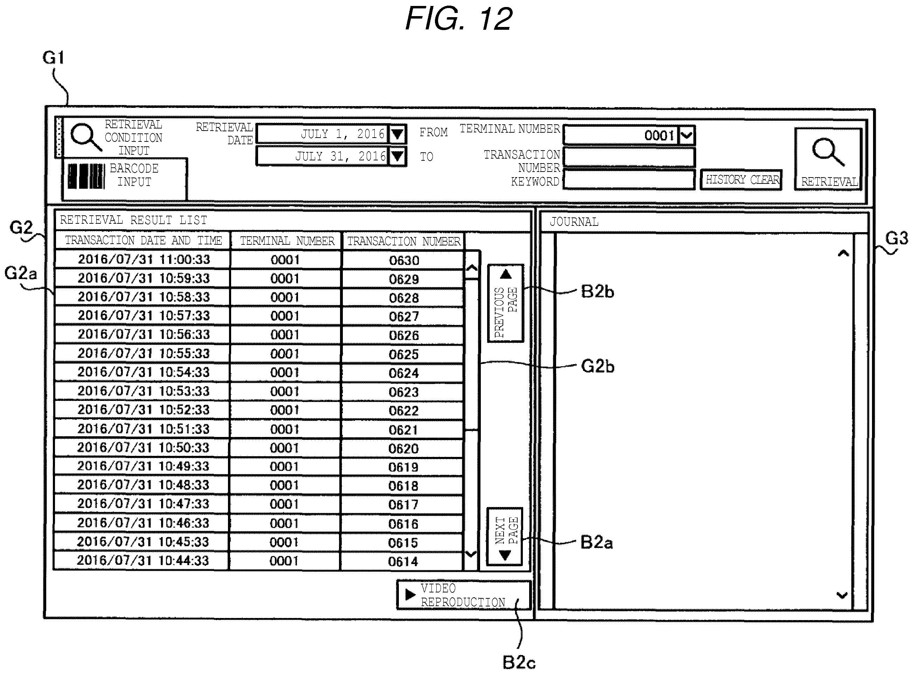

FIG. 12 is a diagram of the operation screen and illustrates the retrieval result displayed on the retrieval result display portion G2. As illustrated in FIG. 12, the retrieval result display portion G2 includes a retrieval result display area G2a. When retrieval of journal data is performed by the data retrieval unit 414, the server processing unit 413 displays a list of retrieval results, also referred to as extraction results, on the retrieval result display area G2a. More specifically, the server processing unit 413 displays the transaction date and time, the terminal number, and the transaction number included in a piece of journal data in correlation with each other in retrieved order, for each piece of journal data extracted by the data retrieval unit 414.

Here, the retrieval result display area G2a can display a predetermined number of pieces of journal data at once. As described above, the maximum number of pieces of journal data that can be displayed on the retrieval result display area G2a coincides with the maximum extraction number of pieces of journal data. That is, the data retrieval unit 414 extracts journal data corresponding to the retrieval condition in a unit of pieces of data that can be displayed on the retrieval result display area G2a. The retrieval result display area G2a of FIG. 11 can display pieces of journal data for 30 transactions at once. A scroll bar G2b is vertically operated so as to display pieces of journal data, which are not displayed, on the retrieval result display area G2a.

A next page button B2a and a previous page button B2b for instructing movement of a page are provided in the retrieval result display portion G2. Furthermore, a video reproduction button B2c for instructing video reproduction is provided at the lower side of the retrieval result display area G2a.

When an operation of the next page button B2a is received, the server processing unit 413 instructs the data retrieval unit 414 to continue retrieval processing. The data retrieval unit 414 starts retrieval processing from the end position of previous retrieval processing according to the instruction to continue retrieval processing and extracts pieces of journal data corresponding to the retrieval condition by the maximum extraction number of pieces. The server processing unit 413 switches display of the retrieval result display area G2a into display of a new detection result so as to display retrieval result for a next page. When the previous page button B2b is pressed, the server processing unit 413 may display a retrieval result for a corresponding page on the retrieval result display portion G2 based on the previously retrieved retrieval result and instruct the data retrieval unit 414 to retrieve a corresponding page again.

As such, in the server apparatus 40 of the present example embodiment, journal data corresponding to the retrieval condition is extracted in of pieces of data that can be displayed on the retrieval result display area G2a and the retrieval result is displayed on the retrieval result display portion G2. With this, the number of extractions of journal data falls within a range of display numbers of the retrieval result display area G2a and thus, it is possible to prevent pieces of journal data not included in the retrieval result display area G2a from being extracted. Accordingly, in the server apparatus 40, retrieval processing is prevented from being inadvertently performed and thus, it is possible to efficiently perform retrieval of journal data.

Referring back to FIG. 8, the server processing unit 413 determines whether journal data which becomes a content display target is selected or not (Step S16). For example, when a single piece of receipt data is selected from among pieces of receipt data displayed on the retrieval result display portion G2 (e.g., retrieval result display area G2a), the server processing unit 413 determines that receipt data of the display target is selected. If a piece of journal data is uniquely specified by retrieval based on transaction-specific information, the server processing unit 413 determines that the piece of journal data is selected as the display target. If it is determined that a piece of journal data which becomes the display target is not selected (No in Step S16), the server processing unit 413 proceeds to Step S18.

If it is determined that the piece of journal data, which becomes the display target, is selected (Yes in Step S16), the server processing unit 413 reads the selected piece of journal data from the storage unit 47 and displays the content of the selected piece of journal data on the journal content display portion G3 of the operation screen (Step S17).

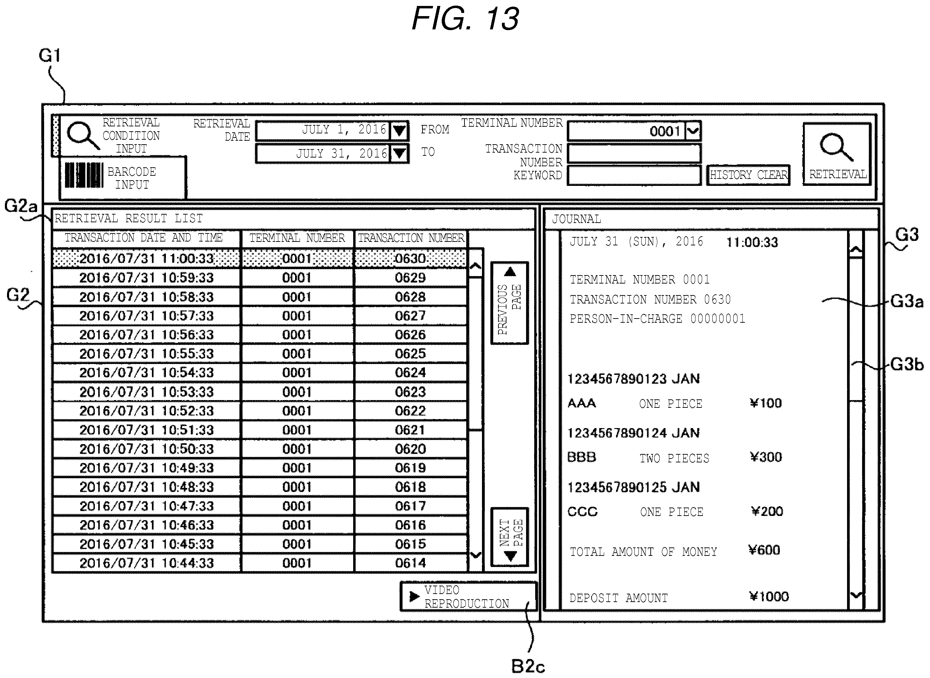

FIG. 13 is a diagram of the operation screen and illustrates a state in which the content of journal data is displayed on the journal content display portion G3. As illustrated in FIG. 13, the server processing unit 413 displays the content of receipt data selected from the retrieval result display portion G2 on a journal content display area G3a provided in the journal content display portion G3.

In FIG. 13, an example in which a piece of journal data having a transaction number 0630 displayed on the retrieval result display portion G2 is selected is illustrated and the content of the piece of journal data is displayed on the journal content display area G3a. The scroll bar G2b is vertically operated so as to display pieces of journal data, which are not displayed, on the retrieval result display area G2a. When a keyword is designated as the retrieval condition, the server processing unit 413 displays a wording corresponding to the keyword included in journal data to be highlighted.

Referring back to FIG. 8, the server processing unit 413 determines whether an instruction to reproduce video data is received by the pressing of the video reproduction button B2c described above (Step S18). If the video reproduction button B2c is not pressed (No in Step S18), the server processing unit 413 returns to processing of Step S13.

When the instruction to reproduce video data is received (Yes in Step S18), the server processing unit 413 cooperates with the reproduction control unit 415 so as to execute video data reproduction processing (Step S19). When journal data of the display target is not selected in Step S16, the server processing unit 413 may return to processing of Step S13 and video data reproduction processing may be executed based on a piece of journal data displayed on the highest order of the retrieval result display area G2a.

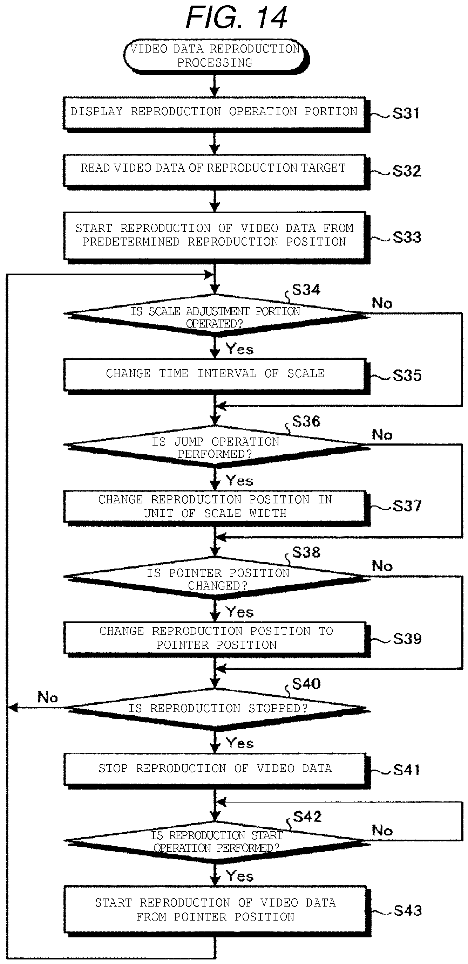

FIG. 14 is a flowchart of video data reproduction processing. The video data reproduction processing is performed in parallel with the processing of FIG. 8.

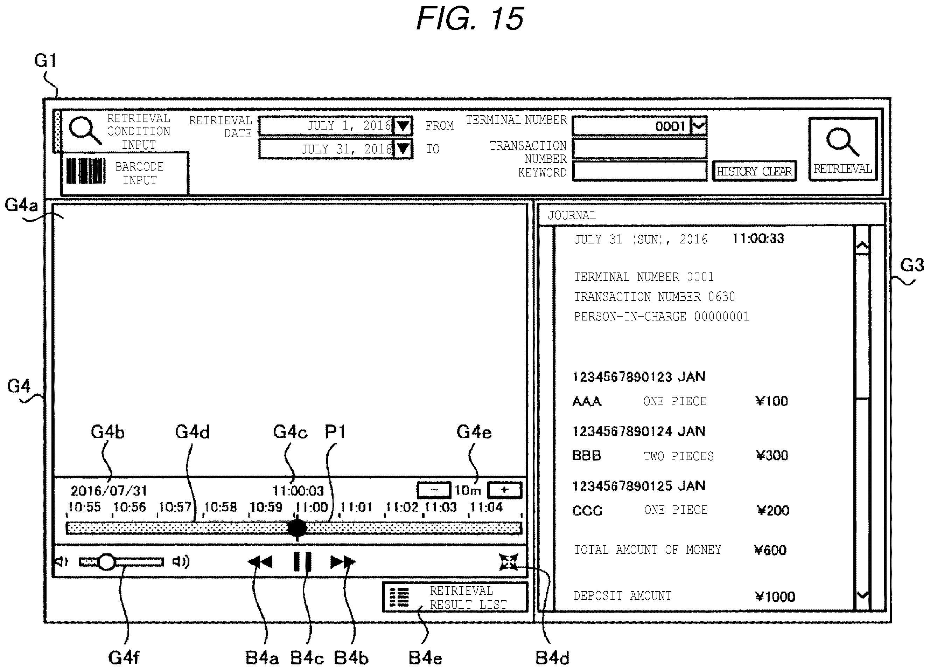

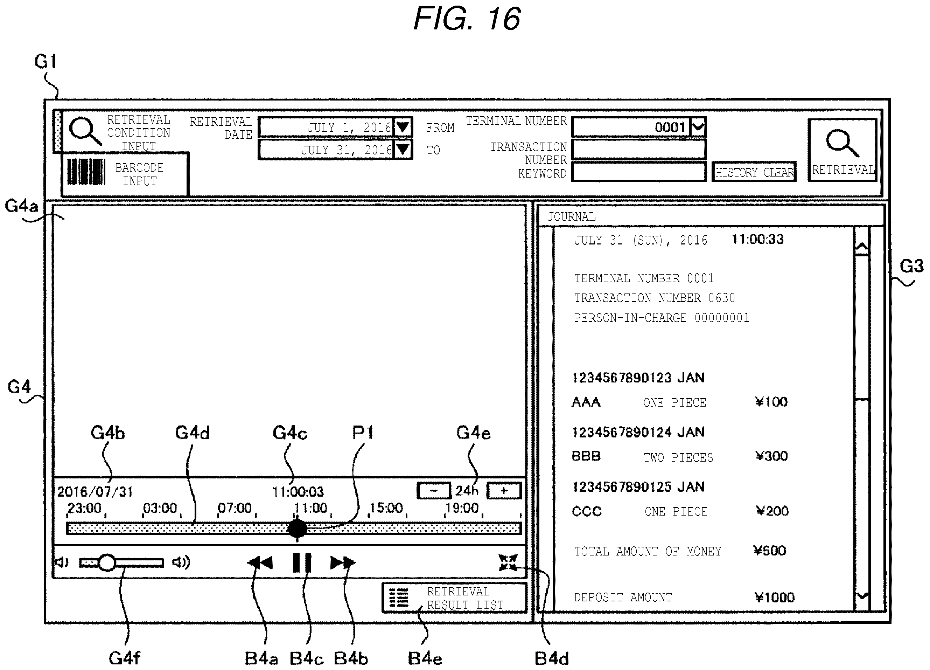

First, the server processing unit 413 switches the retrieval result display portion G2 displayed on the operation screen into a reproduction operation portion G4 (see FIG. 15 and FIG. 16) for video data reproduction (Step S31).

Subsequently, the reproduction control unit 415 reads video data of a reproduction target from the storage unit 47 (Step S32). Here, video data of the reproduction target is related to journal data displayed on the journal content display portion G3, that is, journal data retrieved by the data retrieval unit 414. More specifically, the reproduction control unit 415 specifies the terminal number folder corresponding to the terminal number included in the piece of journal data selected in Step S16 from within the video folder. The reproduction control unit 415 specifies video data, which includes the transaction date and time in time information, from within the previous video folder based on the transaction date and time included in the piece of journal data selected in Step S16. The reproduction control unit 415 reads specified video data.

Next, the reproduction control unit 415 starts reproduction of video data from a predetermined reproduction position (Step S33). Although the start position of video data reproduction does not matter, the start position is preferably the transaction date and time of the piece of journal data selected in Step S16 or the time in the vicinity of the transaction date and time.

FIG. 15 is a diagram illustrating another example of the operation screen and illustrates a state in which the reproduction operation portion G4 is displayed. As illustrated in FIG. 15, when the operation of the video reproduction button B2c is received, the server processing unit 413 displays the reproduction operation portion G4 on an area in which the retrieval result display portion G2 is displayed.

The reproduction operation portion G4 includes a video reproduction area G4a in which video data reproduction is performed, a date display field G4b in which date of date and time information included in video data is displayed, a time display field G4c in which the time of date and time information included in video data is displayed, and a timeline display field G4d in which the time axis (or timeline) of video data is displayed. Here, a predetermined time increment scale is attached to the timeline displayed on the timeline display field G4d. A pointer PI is displayed at a reproduction position on the timeline. The date and the time of the reproduction position are displayed on the date display field G4b and the time display field G4c, respectively.

The reproduction operation portion G4 includes a scale adjustment portion G4e for changing the time interval of the time increment scale attached to the timeline. The scale adjustment portion G4e includes a plus key and a minus key and the keys can be pressed so as to make it possible to enlarge and reduce the time interval. In an example of FIG. 15, a time length of the total timeline can be changed so as to make it possible to change the time interval of the scale. A range of the total timeline can be any value such as 5 minutes, 10 minutes, 30 minutes, 1 hour, 6 hours, 12 hours or 24 hours.

In Step S34 of FIG. 14, the server processing unit 413 waits for a pressing of a key for the scale adjustment portion G4e (No in Step S34 → No in Step S36 → No in Step S38 → No in Step S40). When the pressing of the key of the scale adjustment portion G4e is received (Yes in Step S34), the server processing unit 413 changes the range of the total timeline and the time interval of the scale according to an operation content of the key operation (Step S35).

In FIG. 15, an example in which the length of the entire timeline is set to 10 minutes is illustrated. In this case, the server processing unit 413 sets the range of the total timeline as 10 minutes. The server processing unit 413 changes the time interval of the time increment scale to 1 minute and displays 11 time scale markers on the timeline display field G4d.

FIG. 16 illustrates an example in which the length of the entire timeline is set to 24 hours. In this case, the server processing unit 413 sets the length of the entire timeline as 24 hours. The server processing unit 413 changes the time interval of the time increment scale to 2 hours and displays 13 time scale markers on the timeline display field G4d.

The server processing unit 413 cooperates with the reproduction control unit 415 so as to control the transaction date and time of the piece of journal data selected in Step S16 to be positioned at the center of the timeline. The reproduction control unit 415 reproduces video data in the range of the timeline displayed on the timeline display field G4d.

When video data is divided into pieces of data by a unit of 1 hour or the like, the reproduction control unit 415 connects sequential pieces of video data so as to control such that pieces of video data for the range displayed in the timeline can be continuously reproduced. The reproduction control unit 415 cooperates with the server processing unit 413 so as to control for clearly demonstrating any period of time in which a temporal gap occurs.

The reproduction operation portion G4 includes a sound volume adjustment portion G4f for adjusting a speaker sound volume, a left jump button B4a for moving the reproduction position to the left by one scale, a right jump button B4b for moving the reproduction position to the right by one scale, and a toggle button B4c for instructing to start and stop reproduction by a toggle operation.

Here, by the pressing of the left jump button B4a and the right jump button B4b, instructions to change the reproduction position of the video data in a time range of the timeline can be received.

For example, in FIG. 15, when the left jump button B4a is pressed, the reproduction control unit 415 changes a reproduction position from July 31, 2016, 11:00:03 to July 31, 2016, 11:00. When the right jump button B4b is pressed, the reproduction control unit 415 changes a reproduction position from July 31, 2016, 11:00:03 to July 31, 2016, 11:01. When the time interval of the scale is changed by a pressing of the key of the scale adjustment portion G4e, the reproduction position is changed in a time range of the timeline.

In Step S36 of FIG. 14, the server processing unit 413 waits for the pressing of the left jump button B4a or right jump button B4b (No in Step S36 → No in Step S38 → No in Step S40 → No in Step S34). When the jump button is pressed (Yes in Step S36), the reproduction control unit 415 changes the reproduction position of video data in a time range of the timeline based on a jump direction of the operated jump button (Step S37).

The reproduction position may also be changed by a position of the pointer P1 on the timeline. Specifically, in Step S38 of FIG. 14, the server processing unit 413 waits for the operation of changing the position of the pointer PI (No in Step S38 → No in Step S40 → No in Step S34 → No in Step S36). When the position of the pointer PI is changed (Yes in Step S38), the reproduction control unit 415 changes the reproduction position of video data to the date and time corresponding to the position of the pointer PI after the change (Step S39).

In Step S40, the server processing unit 413 waits for the pressing of the toggle button B4c, that is, an instruction to stop reproduction (No in Step S40 → No in Step S34 → No in Step S36 → No in Step S37). Here, when the toggle button B4c is pressed (Yes in Step S40), the reproduction control unit 415 stops reproduction of video data (Step S41) and proceeds to Step S42.

Subsequently, the server processing unit 413 waits for the pressing of the toggle button B4c, that is, an instruction to start reproduction (No in Step S42). When the toggle button B4c is pressed (Yes in Step S42), the reproduction control unit 415 starts reproduction of video data from the position of the pointer PI on the timeline (Step S43) and returns to Step S34.

The reproduction operation portion G4 includes a full-screen display button B4d for instructing to display a full-screen of the video reproduction area G4a and a retrieval result listing button B4e for switching the reproduction operation portion G4 to display of the retrieval result display portion G2.

When the full-screen display button B4d is pressed, the reproduction control unit 415 displays the video reproduction area G4a in a full-screen. When an pressing of a function key, for example, an ESC key, is received when the video reproduction area G4a is displayed in the full-screen, the reproduction control unit 415 returns the video reproduction area G4a to an original size.

When the retrieval result listing button B4e is pressed, the server processing unit 413 switches the reproduction operation portion G4 to the retrieval result display portion G2. The reproduction control unit 415 stops reproduction of video data according to switching from the reproduction operation portion G4 to the retrieval result display portion G2.

Referring back to FIG. 8, the server processing unit 413 determines whether an instruction to end reproduction is received, by the pressing of the retrieval result listing button B4e or the like (Step S20). When the instruction to end reproduction is not instructed (No in Step S20), the server processing unit 413 continues processing of Step S19.

The instruction to end reproduction is instructed (Yes in Step S20), the server processing unit 413 switches display of the reproduction operation portion G4 to the retrieval result display portion G2 so as to end reproduction of video data (Step S21) and causes processing to return to Step S13.

As described above, the server apparatus 40 of the present example embodiment retrieves a piece of journal data corresponding to the input retrieval condition from the storage unit 47 and specifies video data, which correspond to the transaction date and time of the journal data, in the image capture date and time from the storage unit 47. The server apparatus 40 performs reproduction of specified video data in a range of a predetermined time range including the transaction date and time of the retrieved piece of journal data as a center point. With this, the user of the retrieval terminal 50 is able to confirm video of the transaction date and time and is also able to easily confirm video before and after the transaction date and time and thus, it is possible to efficiently reproduce video data related to the transaction.

The server apparatus 40 enlarges or reduces the range of the time range which becomes a reproduction target according to the operation through the scale adjustment portion G4e. With this, a user of the retrieval terminal 50 is able to enlarge or reduce the range of reproduced video and thus, it is possible to efficiently perform reproduction of video data related to the transaction. Granularity/precision relating designation of the reproduction position can be changed by changing the time range and thus, it is possible to improve convenience when finely changing the reproduction position or when substantially changing the reproduction position.

The server apparatus 40 changes the reproduction position in a unit of scale which is set on the timeline according to the pressing of the left jump button B4a or the right jump button B4b. With this, the user of the retrieval terminal 50 is able to easily change the reproduction position and thus, it is possible to efficiently perform reproduction of video data relates to transaction.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

For example, in the example embodiment described above, the server apparatus 40 and the retrieval terminal 50 are based on a server-client structure but is not limited thereto. The display unit 46 included in the server apparatus 40 may be used so as to allow the operation screen to be displayed in standalone mode.

In the example embodiment described above, although the server apparatus 40 is used as an information processing device having functions of data reception unit 411, data management unit 412, server processing unit 413, data retrieval unit 414, and reproduction control unit 415, an application destination apparatus is not limited thereto.

In the example embodiment described above, the server apparatus 40 includes the data management area 471, but is not limited to this particular server apparatus. An external device accessible by the server apparatus 40 may instead include the data management area 471.

The program executed by each device described above can be provided by being incorporated into a storage medium (ROM or storage unit) included in each device in advance, but is not limited to this particular configuration, and a configuration in which the program is recorded in a computer readable recording medium such as a CD-ROM, a flexible disk (FD), a CD-R, a digital versatile disk (DVD) in a file having an installable format or executable format may also be adopted. Furthermore, the storage medium is not limited to a medium which is independent of a computer or an embedded system, but a storage medium in which a program delivered through the LAN, the Internet, or the like is downloaded and stored or is temporarily stored is also included.

A configuration, in which the program executed by each device of the embodiment described above is stored in a computer connected to a network such as the Internet and is provided by being downloaded through the network, or provided or distributed via the network such as the Internet, may be adopted.

## Claims

1. An information processing device, comprising:
a storage unit that stores transaction journal data for transactions performed at a transaction settlement device in association with video data from a camera capturing images related to the transaction settlement device, the transaction journal data including transaction time and transaction date, the video data including capture time and capture date;
a processor configured to:
receive a retrieval condition input providing a retrieval condition for retrieving transaction journal data from the storage unit;
retrieve the transaction journal data, corresponding to the retrieval condition, from the storage unit;
specify video data stored in the storage unit having the capture time and capture date corresponding to the transaction time and transaction date included the retrieved transaction journal data; and
reproduce the specified video data, the specified video data being within a predetermined time period centered at the transaction date and transaction time of a transaction included in the retrieved journal data.

2. The information processing device according to claim 1, wherein the processor is further configured to start reproduction of the video data from the transaction date and transaction time included in the retrieved journal data.

3. The information processing device according to claim 2, wherein the processor is further configured to:
receive a user instruction to change a reproduction position of the video data in a scale unit having a predetermined time interval, and
reproduce the video data from the changed reproduction position.

4. The information processing device according to claim 3, wherein the processor is further configured to receive a user instruction to change the scale unit.

5. The information processing device according to claim 4, wherein the processor changes the predetermined time period according to the changed scale unit.

6. The information processing device according to any one of claims 1 to 5, wherein a time server provides a time and a date to the transaction settlement device and the camera.

7. The information processing device according to any one of claims 1 to 6, wherein the transaction journal data comprises a plurality of files stored in the storing unit, the files having file names indicating the transaction data and transaction time, and the video data is stored in image files having file names indicating capture time and capture date.

8. A store checkout surveillance system, comprising:
a settlement device that performs registration and settlement of a transaction, and generates transaction journal data including information concerning the transaction and transaction date and transaction time;
a camera that records images of the transaction at the settlement devices and provides video data including capture time and capture date for recorded images in the video data;
the information processing device according to any one of claims 1 to 7; and
a store server including the processor and configured to provide time and date information to the settlement device and the camera.

9. A method for processing information comprising the steps to:
store transaction journal data for transactions performed at a transaction settlement device in association with video data from a camera capturing images related to the transaction settlement device in a storage device, the transaction journal data including transaction time and transaction date, the video data including capture time and capture date;
receive a retrieval condition input providing a retrieval condition for retrieving transaction journal data from the storage device;
retrieve the transaction journal data, corresponding to the retrieval condition, from the storage device;
specify video data stored in the storage device having the capture time and capture date corresponding to the transaction time and transaction date included the retrieved transaction journal data; and
reproduce the specified video data, the specified video data being within a predetermined time period centered at the transaction date and transaction time of a transaction included in the retrieved journal data.

10. The method according to claim 9, further comprising the step to:
start reproduction of the video data from the transaction date and transaction time included in the retrieved journal data.

11. The method according to claim 10, further comprising the step to:
receive a user instruction to change a reproduction position of the video data in a scale unit having a predetermined time interval; and
reproduce the video data from the changed reproduction position.

12. The method according to claim 11, further comprising the step to:
receive a user instruction to change the scale unit.

13. The method according to any one of claims 9 to 12, further comprising the step to: provide, by a time server, a time and a date to the transaction settlement device and the camera.

14. The method according to any one of claims 9 to 13, wherein the transaction journal data comprises a plurality of files stored in the storage device, the files having file names indicating the transaction data and transaction time, and the video data is stored in image files having file names indicating capture time and capture date.

15. A non-transitory computer readable medium storing a control program that, when implemented by a processor causes an information processing device to perform the method according to any one of claims 9 to 14.
